# EUROPÄISCHE PATENTSCHRIFT

(11) **EP 2 632 181 B1**
(45) Veröffentlichungstag und Bekanntmachung des Hinweises auf die Patenterteilung: **21.10.2015**
(21) Anmeldenummer: 12156568.3
(22) Anmeldetag: 22.02.2012
(51) Int. Cl.: H04W 4/02, H04W 4/20

(54) **System und Verfahren zum automatischen Senden von Nachrichten an ein Mobilfunkgerät**
System and method for automatically sending messages to a mobile wireless device
Système et procédé d'émission automatique d'informations vers un terminal mobile

(43) Veröffentlichungstag der Anmeldung: 28.08.2013
(73) Patentinhaber: Capinvision AG, 9100 Herisau (CH)
(72) Erfinder: Wojak, Ernst, 81377 München (DE)
(74) Vertreter: Hofstetter, Schurack & Partner

(56) Entgegenhaltungen:
- EP-A1- 2 317 781
- WO-A1-2006/087905
- US-A1- 2006 116 965

## Beschreibung

Die vorliegende Erfindung betrifft ein System zum automatischen Senden wenigstens einer Nachricht an wenigstens ein Mobilfunkgerät gemäß Patentanspruch 1 sowie ein Verfahren zum automatischen Senden wenigstens einer Nachricht an wenigstens ein Mobilfunkgerät gemäß Patentanspruch 9.

Aus dem allgemeinen Stand der Technik ist es hinlänglich bekannt, Mobilfunkgeräte, beispielsweise Mobiltelefone und/oder so genannte Tablet-Computer, mit einem Zugang zu einem Mobilfunknetz zur Positionsbestimmung zu nutzen. Dazu sind die Mobilfunkgeräte mit einem Positionierungssystem, beispielsweise GPS (Global Positioning System) koppelbar. Dadurch ist es möglich, dass ein Nutzer eines solchen Mobilfunkgeräts seine Position auf der Erde bestimmt und beispielsweise zu einer anderen Position navigieren kann.

Darüber hinaus ist es bekannt, diese Möglichkeit der Positionsbestimmung der Mobilfunkgeräte zu nutzen, um Aktionen bzw. Vorgänge des Mobilfunkgeräts auszulösen. Erreicht beispielsweise der Nutzer des Mobilfunkgeräts mit dem Mobilfunkgerät eine vorgebbare Position, so wird dem Nutzer mittels des Mobilfunkgeräts ein beispielsweise optisches und/oder akustisches Signal kommuniziert. Das Signal weist den Nutzer darauf hin, dass er sich an der vorgebbaren bzw. vorgegebenen Position befindet. Dadurch kann der Nutzer beispielsweise an Aufgaben erinnert und auf diese Aufgaben aufmerksam gemacht werden, welcher er an dieser vorgebbaren Position zu erledigen vorhat bzw. vorhatte.

Diese Erinnerungen und Hinweise sind jedoch von dem Nutzer selbst zu spezifizieren und vorzugeben. Außerdem muss der Nutzer zur Erledigung seiner Aufgaben selbstständig nach Einrichtungen in der Umgebung seiner Position suchen. Darüber hinaus ist es möglich, dass der Nutzer die gewünschten Einrichtungen beispielsweise aufgrund ungünstiger Suchanfragen nicht findet, obwohl sie in relativ naher Umgebung sind. Dies bedeutet, dass sich der Nutzer nicht oder nur sehr aufwändig und schwierig in seiner Umgebung zurecht findet und gegebenenfalls zur Erledigung seiner Aufgaben sehr weite Wege zurücklegen muss oder seine Aufgaben erst gar nicht erledigen kann.

Der US 2006/0116965 A1 und der EP 2 317 781 A1 sind ein Verfahren und ein System zum automatischen Senden wenigstens einer Nachricht über zumindest ein Mobilfunknetz an wenigstens ein Mobilfunkgerät als bekannt zu entnehmen. Das System umfasst zumindest eine, an einem Eingang zu einer Einrichtung angeordnete Erfassungsvorrichtung, welche dazu eingerichtet ist, ein Passieren des Eingangs durch einen Nutzer des Mobilfunkgeräts infolge einer von einem Mobilfunknetz unabhängigen Interaktion eines Eingangselements des Nutzers mit der Erfassungsvorrichtung zu erfassen und infolge des Erfassens des Passierens wenigstens ein Auslösesignal zu übermitteln.

Ferner umfasst das System eine mit der Erfassungsvorrichtung gekoppelte Sendevorrichtung, welche dazu eingerichtet ist, das Auslösesignal zu empfangen und infolge des Empfangs des Auslösesignals die wenigstens eine Nachricht an das Mobilfunkgerät zu übermitteln.

Die WO 2006/087905 A1 offenbart ein tragbares Endgerät, welches dazu ausgebildet ist, automatisch einen Zielort zu bestimmen, an welchem ein Ankunftshinweis ausgegeben wird.

Es ist daher Aufgabe der vorliegenden Erfindung, ein System und ein Verfahren zum automatischen Senden wenigstens einer Nachricht an wenigstens ein Mobilfunkgerät bereitzustellen, welche ein besonders einfaches und bedarfsgerechtes Zurechtfinden des Nutzers des Mobilfunkgeräts in seiner Umgebung ermöglichen.

Diese Aufgabe wird durch ein System mit den Merkmalen des Patentanspruchs 1 sowie durch ein Verfahren mit den Merkmalen des Patentanspruchs 9 gelöst. Vorteilhafte Ausgestaltungen mit zweckmäßigen und nicht-trivialen Weiterbildungen der Erfindung sind in den übrigen Ansprüchen angegeben.

Der erste Aspekt der Erfindung betrifft ein System zum automatischen Senden wenigstens einer Nachricht über zumindest ein Mobilfunknetz an wenigstens ein mit dem Mobilfunknetz gekoppeltes Mobilfunkgerät. Das System umfasst zumindest eine Erfassungsvorrichtung, welche an einem Eingang zu einer Einrichtung angeordnet ist. Die Erfassungsvorrichtung ist dazu eingerichtet, ein Passieren des Eingangs durch einen Nutzer des Mobilfunkgeräts infolge einer von einem Mobilfunknetz unabhängigen Interaktion eines Eingangselements des Nutzers mit der Erfassungsvorrichtung zu erfassen und infolge des Erfassens des Passierens wenigstens ein Auslösesignal zu übermitteln.

Das System umfasst ferner eine mit der Erfassungsvorrichtung gekoppelte Sendevorrichtung. Die Sendevorrichtung ist dazu eingerichtet, das Auslösesignal der Erfassungsvorrichtung zu empfangen und infolge des Empfangens des Auslösesignals die wenigstens eine Nachricht an das Mobilfunkgerät zu übermitteln.

Erfindungsgemäß ist vorgesehen, dass das System eine Speichereinrichtung zum Speichern von Kontaktinformationen des Nutzers umfasst. Ferner ist die Sendevorrichtung dazu eingerichtet, die wenigstens eine Nachricht an die zeitlich vor der Interaktion des Eingangselements mit der Erfassungsvorrichtung in der Speichereinrichtung des Systems hinterlegten Kontaktinformationen des Nutzers zu übermitteln.

Das erfindungsgemäße System ermöglicht somit die präzise Erfassung, dass der Nutzer des Mobilfunkgeräts die Einrichtung über ihren Eingang betreten hat bzw. in oder auf die Einrichtung gelangt ist. Als Folge kann der Nutzer mittels der an sein Mobilfunkgerät übermittelten Nachricht mit bedarfsgerechten Informationen zu der Einrichtung und damit zur Umgebung des Nutzers versorgt werden, ohne dass der Nutzer von sich aus aktiv werden und nach Informationen über seine Umgebung über die Einrichtung suchen muss. Das erfindungsgemäße System ermöglicht somit ein besonders einfaches und bedarfsgerechtes Zurechtfinden des Nutzers in seiner derzeitigen Umgebung.

Die Präzision der Erfassung des Passierens des Eingangs durch den Nutzer ist bei dem erfindungsgemäßen System insbesondere gegenüber einer Positionsbestimmung über ein satellitengestütztes Positionierungssystem höher, so dass auch nur dann die wenigstens eine Nachricht an das Mobilfunkgerät übermittelt werden kann, wenn der Nutzer tatsächlich in bzw. auf die Einrichtung gelangt ist. So kann der Nutzer besonders präzise über seine Umgebung informiert werden, ohne selbstständig nach Informationen über seine Umgebung suchen zu müssen. Mit anderen Worten stellt die Interaktion des Eintrittselements mit der Erfassungsvorrichtung ein Auslöseereignis dar, infolge dessen das Auslösesignal übermittelt und das Übermitteln der wenigstens einen Nachricht ohne weiteres Zutun des Nutzers ausgelöst wird. Dadurch kann der Nutzer individuell und erst dann mit den Informationen zu seiner Umgebung versorgt werden, wenn er auch tatsächlich in bzw. auf der Einrichtung ist.

Bei dem Eingang handelt es sich beispielsweise um einen Personeneingang in Form einer Schleuse, eines Portals bzw. einer Pforte, eines Drehkreuzes oder dergleichen, über welche der Nutzer die Einrichtung betreten kann oder in bzw. auf die Einrichtung gelangen kann. Bei dem Eingang kann es sich beispielsweise auch um eine Durchfahrt für ein Fahrzeug, beispielsweise für einen Personenkraftwagen, einen Nutzkraftwagen, ein Schienenfahrzeug oder für ein anderweitiges Landfahrzeug, für ein Wasserfahrzeug wie beispielsweise ein Schiff, um einen Tunnel, einen Steg zu einem Schiff, oder dergleichen handeln. Bei dem Eingang kann es sich auch um einen Eingang zu einem Gebiet, beispielsweise ein Skigebiet, handeln. Dabei ist der Eingang zum Beispiel ein Eingang zu einem Skilift handeln.

Durch Passieren des Eingangs kann dann der Nutzer mittels der wenigstens einen Nachricht mit entsprechenden Informationen zur Einrichtung und damit zu seiner Umgebung versorgt werden.

Die Einrichtung ist z. B. eine Messe bzw. ein Messgelände und/oder wenigstens ein Messegebäude, eine Messehalle, ein Sportstadion, eine Sporthalle, ein Fahrzeug, insbesondere ein Landfahrzeug, Luftfahrzeug oder ein Wasserfahrzeug. Bei der Einrichtung kann es sich auch um einen Verkehrsabschnitt einer Verkehrseinrichtung, insbesondere um einen Straßenabschnitt eines Straßennetzes, um einen Autobahnabschnitt einer Autobahn oder dergleichen handeln.

Handelt es sich bei der Einrichtung beispielsweise um eine Messe, so kann der Nutzer gezielt und bedarfsgerecht mittels der wenigstens einen Nachricht mit Informationen über die Messe, ihre insbesondere direkte Umgebung und somit über in der Nähe der Messe verlaufende Straßen, insbesondere Autobahnen, ihre Aussteller und/oder ihre ausgestellten Produkte versorgt werden. Ebenso möglich ist es, den Nutzer mit Informationen über Veranstaltungen und insbesondere über den Ort und die Zeit der Veranstaltungen zu informieren, welche in bzw. auf der Messe durchgeführt werden.

Handelt es sich bei der Einrichtung beispielsweise um einen Autobahnabschnitt, so kann der Nutzer gezielt und bedarfsgerecht mittels der wenigstens einen Nachricht über eine Verkehrssituation auf dem Autobahnabschnitt, welcher von dem Nutzer befahren wird, informiert werden. Dadurch ist es beispielsweise möglich, den Nutzer vor den einem voraus liegenden Verkehrsstau und/oder vor einer vorausliegenden Gefahrensituation zu warnen, welchen bzw. welche der Nutzer dann umfahren kann.

Das erfindungsgemäße System ermöglicht zudem das Übermitteln von mehreren Nachrichten sowie das Übermitteln wenigstens einer Nachricht an mehrere Mobilfunkgeräte über das Mobilfunknetz. Dadurch ist es möglich, jeweilige Nutzer der entsprechenden Mobilfunkgeräte kostengünstig, zeitnah, zielgerichtet und individuell mit Informationen über ihre jeweilige Umgebung bzw. über die Einrichtung zu versorgen, woraus ein besonders einfaches Zurechtfinden der Nutzer resultiert.

In vorteilhafter Ausgestaltung ist das Eingangselement eine aus Papier und/oder aus einem Kunststoff gebildete Eintrittskarte. Dies ermöglicht eine präzise Erfassung des Passierens des Eingangs durch den Nutzer. Dabei wird die Interaktion der Eintrittskarte mit Hilfe einer Person, insbesondere des Nutzers, durchgeführt, so dass die Eintrittskarte und die Erfassungsvorrichtung zusammenwirken können.

Bei dem Eintrittselement kann es sich alternativ oder zusätzlich auch um einen Nummern- und/oder Buchstabencode handeln, welcher in die Erfassungsvorrichtung einzugeben ist. Ebenso möglich ist es, dass das Eintrittselement wenigstens ein Fingerabdruck, insbesondere des Nutzers, ist.

Bei einer weiteren Ausführungsform der Erfindung sind das Eingangselement und die Erfassungsvorrichtung dazu eingerichtet, zum Erfassen des Passierens des Eingangs über elektromagnetische Wellen miteinander zu interagieren. Dies ermöglicht eine besonders einfache, präzise und für den Nutzer sehr komfortable Erfassung des Passierens des Eingangs durch den Nutzer, da die Interaktion zwischen der Erfassungsvorrichtung und dem Eingangselemente ohne Zutun einer Person und insbesondere ohne Zutun des Nutzers und insbesondere berührungslos erfolgen kann. Der Nutzer kann das Eingangselement beispielsweise auf komfortable Weise einfach in einer Tasche oder dergleichen Behältnis mit sich führen und den Eingang mit dem Eingangselement passieren, wobei die Erfassungsvorrichtung und das Eingangselement über elektromagnetische Wellen miteinander interagieren.

Vorzugsweise umfasst das Eingangselement wenigstens einen RFID-Chip (RFID - Radio Frequency Identification) zum Interagieren über elektromagnetische Wellen mit der Erfassungsvorrichtung. Dadurch kann die für den Nutzer komfortable Erfassung des Passierens auf kostengünstige sowie platzsparende Weise realisiert werden.

Des Weiteren kann vorgesehen sein, dass das Eintrittselement und die Erfassungsvorrichtung dazu eingerichtet sind, zum Erfassen des Passierens des Eingangs über die sogenannte Nahfeld-Kommunikation (NFC - Near Field Communication) miteinander zu interagieren. Die Nahfeld-Kommunikation ist ein internationaler Übertragungsstandard zum kontaktlosen Austausch von Daten über kurze Strecken.

Mittels der Nahfeld-Kommunikation können beispielsweise bargeldlose Zahlungen durchgeführt werden, so dass der Nutzer zum Beispiel gleichzeitig mit dem Passieren des Eingangs den Eintrittspreis über die Nahfeld-Kommunikation zahlen kann.

Das Eintrittselement kann auch in das Mobilfunkgerät integriert sein, wobei die Interaktion zwischen dem als Eintrittselement fungierenden Mobilfunkgerät und der Erfassungsvorrichtung unabhängig von dem Mobilfunknetz durchgeführt wird. In Zusammenhang mit der Nahfeld-Kommunikation ist dabei ein Chip oder dergleichen Element zur Durchführung der Nahfeld-Kommunikation in das Mobilfunkgerät integriert, so dass das Mobilfunkgerät als Eintrittselement mit der Erfassungsvorrichtung über die Nahfeld-Kommunikation interagieren kann.

Bei der Einrichtung kann es sich auch um einen Parkplatz, ein Parkhaus oder dergleichen Parkplatzeinrichtung handeln, wobei die Erfassungsvorrichtung beispielsweise ein Bezahlautomat ist, an dem der Nutzer Kosten für das Abstellen seines Fahrzeugs, insbesondere seines Kraftwagens oder seines Kraftrades, bezahlen kann. Der Nutzer bezahlt dabei mittels des Eintrittselements, welches eine Bezahlkarte, insbesondere eine Kreditkarte oder EC-Karte sein kann. Das Bezahlen kann insbesondere über die Nahfeld-Kommunikation erfolgen, wobei vorzugsweise vorgesehen ist, dass das Eintrittselement in das Mobilfunkgerät integriert ist und der Nutzer somit über die Nahfeld-Kommunikation bargeldlos mittels seines Mobilfunkgeräts bezahlt. In der Folge kann dem Nutzer die Nachricht übermittelt werden, um ihm so Informationen um die Umgebung der Parkplatzeinrichtung zukommen zu lassen.

Die Einrichtung kann auch eine sogenannte Car-Sharing-Einrichtung sein, welche wenigstens ein Fahrzeug, insbesondere eine Mehrzahl von Fahrzeugen, als jeweiligen Eingang umfasst. Die Fahrzeuge der Car-Sharing-Einrichtung können von unterschiedlichen Personen, die an der Car-Sharing-Einrichtung teilnehmen bzw. bei dieser registriert sind, genutzt werden. Bei den Fahrzeugen handelt es sich vorzugsweise um Kraftwagen.

Zum Nutzen eines der Fahrzeuge erfolgt die Interaktion des Eintrittselements des Nutzers mit der am bzw. im Fahrzeug (Eingang) angeordneten Erfassungsvorrichtung. Das Eintrittselement ist hierbei beispielsweise eine Teilnahmekarte der Car-Sharing-Einrichtung. Das Eintrittselement kann auch in das Mobilfunkgerät integriert sein. Im Rahmen der Interaktion, welche beispielsweise über die Nahfeld-Kommunikation durchgeführt wird, erfolgt auch eine Bezahlung oder eine Vorbereitung einer Bezahlung der Nutzung des entsprechenden Fahrzeugs durch den Nutzer. Der Nutzer übermittelt im Rahmen der Interaktion Zahlungsinformationen an die Erfassungseinrichtung, welche diese an eine Recheneinrichtung des Systems übermittelt. Nach gefahrener Strecke und/oder einer Nutzungsdauer des Fahrzeugs durch den Nutzer werden dann die Nutzungskosten berechnet.

Infolge der Interaktion des Eintrittselements mit der Erfassungsvorrichtung des Fahrzeugs, dessen Position beispielsweise mittels eines Positionierungssystems erfasst wird und somit bekannt ist, wird dem Nutzer die Nachricht mit Informationen über die derzeitige Umgebung des Fahrzeugs und somit des Nutzers übermittelt.

Durch die Verknüpfung des Passierens des Eingangs der Einrichtung mit dem Übermitteln der wenigstens einen Nachricht kann auch der Zeitpunkt, zu welchem der Nutzer den Eingang passiert hat, berücksichtigt werden, so dass der Inhalt der wenigstens einen Nachricht entsprechend auf den Zeitpunkt bzw. die Uhrzeit abgestimmt werden kann, zu der der Nutzer in die Einrichtung gelangt. So ist es möglich, den Nutzer über noch in der Zukunft durchzuführende Veranstaltungen oder dergleichen zu informieren. Eine Information des Nutzers über bereits vergangene Veranstaltungen oder dergleichen kann vermieden werden.

In weiterer vorteilhafter Ausgestaltung der Erfindung sind das Eingangselement und die Erfassungsvorrichtung dazu eingerichtet, derart miteinander zu interagieren, dass das Eingangselement zumindest teilweise in eine Aufnahmeöffnung der Erfassungsvorrichtung einführbar ist. Dadurch ist eine kostengünstige und dennoch sehr präzise Erfassung des Passierens des Eingangs ermöglicht.

Dazu kann das beispielsweise als Eintrittskarte ausgebildete Eingangselement in eine Aufnahmeöffnung, insbesondere in einen Schlitz, der Erfassungsvorrichtung eingesteckt und/oder durch die Aufnahmeöffnung, insbesondere den Schlitz, hindurchbewegt, insbesondere hindurch gezogen, werden.

Bei einer weiteren vorteilhaften Ausführungsform der Erfindung weist das Eingangselement wenigstens ein optisch erfassbares Muster, insbesondere einen Strichcode, auf, wobei die Erfassungsvorrichtung wenigstens eine optische Erfassungseinrichtung umfasst, mittels welcher zum Interagieren der Erfassungsvorrichtung mit dem Eingangselement das optische Muster des Eingangselements erfassbar ist. Dadurch ist eine besonders einfache und schnelle Erfassung des Passierens des Eingangs durch den Nutzer ermöglicht. Das Muster ist beispielsweise auf dem als Eintrittskarte ausgebildeten Eingangselement angeordnet, insbesondere aufgedruckt.

Das optisch erfassbare Muster ist zum Beispiel ein QR-Code (QR - quick response). Dabei handelt es sich um einen zweidimensionalen Code, mittels welchem das Passieren des Eingangs sowie gegebenenfalls weitere Informationen des Nutzers erfassbar sind.

Das Muster kann auch auf einem elektronischen Bildschirm, insbesondere auf einem Bildschirm des Mobilfunkgeräts, vorgesehen sein. Das Eingangselement kann beispielsweise über das Mobilfunknetz an das Mobilfunkgerät und somit an den Nutzer übermittelt sein, wobei die Interaktion selbst von dem Mobilfunknetz unabhängig ist.

Zum Interagieren der Erfassungsvorrichtung mit dem optischen Muster des Eingangselements wird das Eingangselement bzw. sein optisches Muster in einen Erfassungsbereich der optischen Erfassungseinrichtung bewegt, so dass die optische Erfassungseinrichtung das optische Muster erfassen kann.

Durch diese gezielte Erfassung des Passierens des Eingangs durch den Nutzer ist es insbesondere auch möglich, die tatsächliche Anwesenheit des Nutzers zu erfassen und so beispielsweise eine Zählung von Personen in bzw. auf der Einrichtung vorzunehmen. Ebenso ist es möglich, infolge der Erfassung des Passierens des Eingangs eine Hinweisnachricht, insbesondere eine Email oder dergleichen, an den Betreiber der Einrichtung, insbesondere an den Veranstalter, und/oder an wenigstens einen der Aussteller der Messe zu übermitteln. Die Hinweisnachricht kann dabei über ein Mobilfunknetz an ein Mobilfunkgerät des Betreibers der Einrichtung übermittelt werden. Dadurch kann der Betreiber der Einrichtung darüber informiert werden, dass der Nutzer des Mobilfunkgeräts die Einrichtung betreten hat bzw. auf die Einrichtung gelangt ist.

Bei einer weiteren, besonders vorteilhaften Ausführungsform der Erfindung umfasst das System wenigstens eine weitere Erfassungsvorrichtung, wobei die weitere Erfassungsvorrichtung und das Mobilfunkgerät dazu eingerichtet sind, eine Relativposition des Mobilfunkgeräts zur Einrichtung mittels eines Positionierungssystems zu ermitteln. Mit anderen Worten ist es so möglich, eine aktuelle Position des Mobilfunkgeräts und damit des Nutzers auf bzw. in der Einrichtung zu ermitteln um so den Nutzer zielgerichtet mit bedarfsgerechten Informationen zu seiner näheren Umgebung zu versorgen. Dazu wird dem Nutzer beispielsweise wenigstens eine weitere Nachricht in Abhängigkeit von seiner mittels der weiteren Erfassungsvorrichtung erfassten Position relativ zur Einrichtung übermittelt.

Ferner ist es dadurch auf einfache und für den Nutzer komfortable Weise möglich, das Verlassen der Einrichtung durch den Nutzer zu erfassen. Zu dieser Erfassung des Verlassens ist beispielsweise keine weitere Interaktion des Nutzers und/oder des Eingangselements mit einer Komponente des Systems vorgesehen und vonnöten.

Zur Erfassung des Verlassens der Einrichtung durch den Nutzer ist beispielsweise wenigstens ein vorgebbarer Schwellenwert vorgesehen, welcher eine Entfernung des Mobilfunkgeräts bzw. des Nutzers von der Einrichtung, insbesondere von dem Eingang, charakterisiert.

Überschreitet die mittels der weiteren Erfassungsvorrichtung erfasste Entfernung des Mobilfunkgeräts und damit des Nutzers von der Einrichtung den vorgebbaren Schwellenwert, so kann dadurch auf das Verlassen der Einrichtung durch den Nutzer rückgeschlossen werden. Daraufhin kann das Übermitteln von weiteren Nachrichten an das Mobilfunkgerät mittels der Sendevorrichtung über das Mobilfunknetz vermieden werden.

Vorzugsweise ist das Positionierungssystem ein satellitengestütztes Positionierungssystem, insbesondere GPS (Global Positioning System). Dadurch ist eine ausreichend präzise sowie kostengünstige Erfassung der aktuellen Position des Mobilfunkgeräts und damit des Nutzers möglich.

Mittels der Anwesenheitserfassung bzw. -kontrolle und vorzugsweise in Kombination mit der Erfassung des Verlassens der Einrichtung ist es beispielsweise möglich, im Rahmen einer in bzw. auf der Einrichtung stattfindenden Hauptversammlung von Teilhabern, insbesondere Aktionären, eines Unternehmens oder dergleichen zu überprüfen, ob der Nutzer des Mobilfunkgeräts bei einer Abstimmung im Rahmen der Versammlung noch anwesend ist. Alternativ oder zusätzlich kann erfasst werden, ob der Nutzer zu einer bestimmten Zeit noch in bzw. auf der Einrichtung ist. Gegebenenfalls kann in diesem Zusammenhang dem Nutzer des Mobilfunkgeräts auch eine Nachricht zugeleitet werden, dass die Abstimmung bevorsteht.

Das Positionierungssystem zum Erfassen der derzeitigen Position des Nutzers relativ zur Einrichtung kann auch beispielsweise ein drahtloses Datenübertragungsnetzwerk, zum Beispiel WLAN (wireless local area network) sein. So ist es zum Beispiel auf bzw. in Einrichtungen, bei denen ein satellitengestütztes Positionierungssystem aufgrund von den Nutzer abschirmenden Decken und/oder Wänden nicht funktioniert, möglich, den Nutzer bzw. dessen Relativposition zur Einrichtung zu Erfassen und in der Folge bedarfsgerecht mit Informationen zu versorgen. Bei dem drahtlosen Datenübertragungsnetzwerk handelt es sich somit um ein der Einrichtung zugeordnetes, lokales drahtloses Datenübertragungsnetzwerk, welche eine drahtlose Datenübertragung in einem lokalen Netzwerk in bzw. auf der Einrichtung ermöglicht.

Das lokale, drahtlose Datenübertragungsnetzwerk der Einrichtung kann vorteilhafterweise auch vom Nutzer des Mobilfunkgeräts zum Navigieren in bzw. auf der Einrichtung genutzt werden. Mit anderen Worten ist es für den Nutzer möglich, dass er über das lokale, drahtlose Datenübertragungsnetzwerk mittels seines Mobilfunkgeräts die derzeitige Relativposition seines Mobilfunkgeräts und damit seine eigene, derzeitige Relativposition zur Einrichtung ermittelt und in der Folge Informationen erhalten kann, wie, d.h. auf welchem Wege er zu einer gewünschten Stelle, beispielsweise zu einem gewünschten Messestand, der Einrichtung gelangt.

Dazu können dem Nutzer auf einem Bildschirm des Mobilfunkgeräts Richtungshinweise wie beispielsweise Pfeile oder eine Route angezeigt werden, damit der Nutzer einfach und komfortabel sowie auf sichere Weise zu der gewünschten Stelle findet.

Auf diese Art kann der Nutzer beispielsweise bei einer Gefahrensituation mit Richtungshinweisen versorgt werden, die ihn zu dem nächstgelegenen und/oder am besten zu erreichenden Notausgang führen.

Der zweite Aspekt der Erfindung betrifft ein Verfahren zum automatischen Senden wenigstens einer Nachricht über zumindest ein Mobilfunknetz an wenigstens ein Mobilfunkgerät, bei welchem ein Passieren eines Eingangs zu einer Einrichtung durch einen Nutzer des Mobilfunkgeräts mittels einer an dem Eingang angeordneten Erfassungsvorrichtung infolge einer von einem Mobilfunknetz unabhängigen Interaktion des Eingangselements des Nutzers mit der Erfassungsvorrichtung erfasst wird.

Des Weiteren wird wenigstens ein Auslösesignal mittels der Erfassungsvorrichtung infolge des Erfassens des Passierens übermittelt. Ferner wird das Auslösesignal durch eine mit der Erfassungsvorrichtung gekoppelte Sendevorrichtung empfangen. Daraufhin wird die wenigstens eine Nachricht an das Mobilfunkgerät mittels der Sendevorrichtung infolge des Empfangens des Auslösesignals übermittelt. Vorteilhafte Ausgestaltungen des ersten Aspekts der Erfindung sind als vorteilhafte Ausgestaltungen des zweiten Aspekts der Erfindung anzusehen und umgekehrt.

Das Verfahren weist erfindungsgemäß einen Schritt auf, bei welchem Kontaktinformationen des Nutzers in einer Speichereinrichtung des Systems zeitlich vor der Interaktion des Eingangselements mit der Erfassungsvorrichtung hinterlegt werden. Ferner weist das Verfahren einen zweiten Schritt auf, bei welchem die wenigstens eine Nachricht an die in der Speichereinrichtung hinterlegten Kontaktinformationen übermittelt wird.

Das erfindungsgemäße Verfahren ermöglicht die gezielte und bedarfsgerechte Übermittlung der wenigstens einen Nachricht an den Nutzer und somit die Übermittlung von gezielten Informationen über die Umgebung des Nutzers an diesen.

Die Übermittlung der wenigstens einen Nachricht in Abhängigkeit von dem Auslösesignal und somit in Abhängigkeit von dem Passieren des Zugangs ist dabei insofern vorteilhaft, als der Nutzer nicht selbst aktiv werden und beispielsweise eine Anwendung seines Mobilfunkgeräts starten bzw. bedienen muss. Mit anderen Worten erhält der Nutzer die wenigstens eine Nachricht passiv. Der Nutzer muss somit nicht aktiv nach Informationen zu seiner Umgebung suchen und kann sich so auf einfache und komfortable Weise in bzw. auf der Einrichtung zurechtfinden.

Als die wenigstens eine Nachricht wird vorzugsweise eine Bildnachricht und/oder eine Textnachricht, insbesondere eine Email, übermittelt. Dadurch können dem Nutzer auf übersichtliche Weise Informationen beispielsweise über Veranstaltungen, Produkte, Gebäude, Institutionen und/oder dergleichen in seiner Umgebung übermittelt werden. Die Nachricht kann jedoch auch eine SMS (Short Message Service) oder eine MMS (Multimedia Messaging Service) oder eine akustische Nachricht sein.

Bei dem Mobilfunkgerät handelt es sich beispielsweise um ein Mobiltelefon, einen Tablet-PC und/oder über ein anderweitiges, elektronisches Gerät vorzugsweise mit einem Bildschirm, auf welchem die als Text- und/oder Bildnachricht ausgebildete Nachricht angezeigt werden kann. Dies ermöglicht ein besonders komfortables und einfaches Zurechtfinden des Nutzers in der Einrichtung bzw. seiner Umgebung.

Bei einer besonders vorteilhaften Ausführungsform der Erfindung wird die wenigstens eine Nachricht in Abhängigkeit von wenigstens einer vorgebbaren, nutzerspezifischen Angabe übermittelt. Die nutzerspezifische Angabe bezieht sich beispielsweise auf Informationen über ein Produkt, Produktarten, Dienstleistungen und/oder anderweitige Kategorien in bzw. auf der Einrichtung, welche er zeitlich vor dem Passieren des Eingangs angeben bzw. auswählen kann. Je nach nutzerspezifischer Angabe können somit unterschiedlichen Nutzern, welche in bzw. auf die Einrichtung gelangen, unterschiedliche und bedarfsgerechte Informationen zur Einrichtung übermittelt werden, ohne dass der jeweilige Nutzer aktiv danach suchen muss. Dadurch ist insbesondere eine interessensgerechte Versorgung des jeweiligen Nutzers mit Informationen möglich. Der Inhalt der wenigstens einen Nachricht, d. h. die Informationen, welche dem Nutzer mittels der wenigstens einen Nachricht übermittelt werden, kann bzw. können beispielsweise von jeweiligen Anbietern von Produkten, Dienstleistungen und/oder dergleichen in bzw. auf der Einrichtung erzeugt und beispielsweise in der Sendevorrichtung hinterlegt werden.

So kann die Sendevorrichtung den jeweiligen Nutzer insbesondere in Abhängigkeit von der wenigstens einen, nutzerspezifischen Angabe bedarfsgerecht und gezielt mit den Informationen versorgen. Darüber hinaus ist es möglich, dem Nutzer Informationen über Zeitverlegungen von Veranstaltungen sowie Gefahrenhinweise zukommen zu lassen. Derartige Gefahrenhinweise sind insbesondere in Flugzeugen, Schiffen, Zügen oder auch festen Einrichtungen wie Tunnels hilfreich, um im Bedarfsfalle eine Nachricht zu übermitteln, über welchen Fluchtweg der Nutzer des Mobilfunkgeräts sich am besten in Sicherheit bringen kann.

Bei einer weiteren Ausführungsform der Erfindung wird wenigstens eine weitere Nachricht über das Mobilfunknetz an das Mobilfunkgerät übermittelt. So ist es möglich, den Nutzer über Veränderungen in seiner Umgebung, insbesondere bezüglich Veranstaltungen, Verkehrssituationen, Gefahrensituationen oder dergleichen auf dem Laufenden zu halten, ohne dass der Nutzer von sich aus aktiv werden muss.

Vorzugsweise wird die wenigstens eine weitere Nachricht in Abhängigkeit von der Zeit und/oder von einer Position des Mobilfunkgeräts relativ zur Einrichtung, insbesondere zum Eingang, übermittelt. So ist es beispielsweise möglich, den Nutzer auf zeitlich bevorstehende Veranstaltungen und/oder auf Gebäude, Produkte, Dienstleitungen und/oder dergleichen auf bzw. in der Einrichtung und in der Nähe des Nutzers bedarfsgerecht und gezielt aufmerksam zu machen. Dadurch können die Informationen über die Umgebung des Nutzers gefiltert und auf einen Teilbereich der gesamten Einrichtung beschränkt werden, je nachdem, wo sich der Nutzer in oder auf der Einrichtung aufhält.

Insbesondere ist es vorteilhaft, die Übermittlung der Nachricht, insbesondere der weiteren Nachricht, mit einer vorgebbaren Zeitdauer eines Vorgangs in bzw. auf der Einrichtung zu verknüpfen. So kann dem Nutzer beispielsweise kurz vor dem Ende oder am Ende des Vorgangs die Nachricht geschickt werden, um den Nutzer mit Informationen und/oder Hinweisen oder dergleichen zu versorgen.

Ist die Einrichtung beispielsweise der oben genannte Skilift, so kann der Vorgang das Befördern des Nutzers vom Anfang bzw. Einstieg des Skilifts bis zum Ende bzw. Ausstieg des Skilifts und die Zeitdauer die Beförderungsdauer des Nutzers vom Einstieg bis zum Ausstieg sein. Kurz vor Ende der Beförderungsdauer (Zeitdauer) und somit kurz vor Ende der Beförderung (Vorgang) kann dem Nutzer die Nachricht geschickt werden, dass die Beförderung bald endet und dass er sich auf das Verlassen des Skilifts vorbereiten sollte.

Die Zeitdauer kann auch eine Parkdauer sein, für welche der Nutzer gezahlt hat und über welche der Nutzer sein Fahrzeug auf der oben genannten Parkplatzeinrichtung abstellen darf. Vor Ablauf der Parkdauer kann dem Nutzer die Nachricht und damit der Hinweis übermittelt werden, dass die Parkdauer abläuft, so dass er sein Fahrzeug von der Parkeinrichtung rechtzeitig entfernen oder für weitere Parkdauer nachzahlen kann.

Bei einer weiteren Ausführungsform der Erfindung wird das Übermitteln von Nachrichten über Mobilfunk an das Mobilfunkgerät in Abhängigkeit von einer Position des Mobilfunkgeräts relativ zu der Einrichtung, insbesondere dem Eingang, übermittelt. So ist es beispielsweise möglich, dem Nutzer keine weiteren Nachrichten mehr zukommen zu lassen, wenn dieser die Einrichtung verlassen hat. Daraus resultiert ein sehr hoher Komfort für den Nutzer, da dieser zum Beenden der Ermittlung von Nachrichten nicht aktiv werden muss.

Vorzugsweise wird das Übermitteln von Nachrichten beendet, wenn eine Entfernung des Mobilfunkgeräts von der Einrichtung, insbesondere vom Eingang, einen vorgebbaren Schwellenwert überschreitet. Bei Überschreiten des vorgebbaren Schwellenwerts kann definiert auf ein Verlassen der Einrichtung durch den Nutzer rückgeschlossen werden, so dass präzise die Übermittlung von weiteren Nachrichten an das Mobilfunkgerät vermieden werden kann.

In einer weiteren, vorteilhaften Ausführungsform wird das Übermitteln von Nachrichten über Mobilfunk an das Mobilfunkgerät in Abhängigkeit von der Zeit beendet. Dadurch kann für den Nutzer besonders komfortabel vermieden werden, den Nutzer mit Informationen beispielsweise über bereits geschlossene Institutionen und/oder beendete Veranstaltungen zu informieren. Dies kommt dem einfachen Zurechtfinden des Nutzers zugute.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig.1: eine schematische Darstellung eines Systems zum automatischen Senden von Nachrichten an wenigstens ein Mobilfunkgerät, mit einer an einem Eingang zu einer Einrichtung angeordneten Erfassungsvorrichtung und mit einer mit der Erfassungsvorrichtung gekoppelten Sendevorrichtung, mittels welcher infolge eines Passierens des Eingangs durch einen Nutzer des Mobilfunkgeräts wenigstens eine Nachricht an das Mobilfunkgerät zu übermitteln ist; und
- Fig. 2: ein Ablaufdiagramm zur Veranschaulichung eines Verfahrens zum Senden von Nachrichten an ein Mobilfunkgerät bei dem System gemäß Fig. 1.

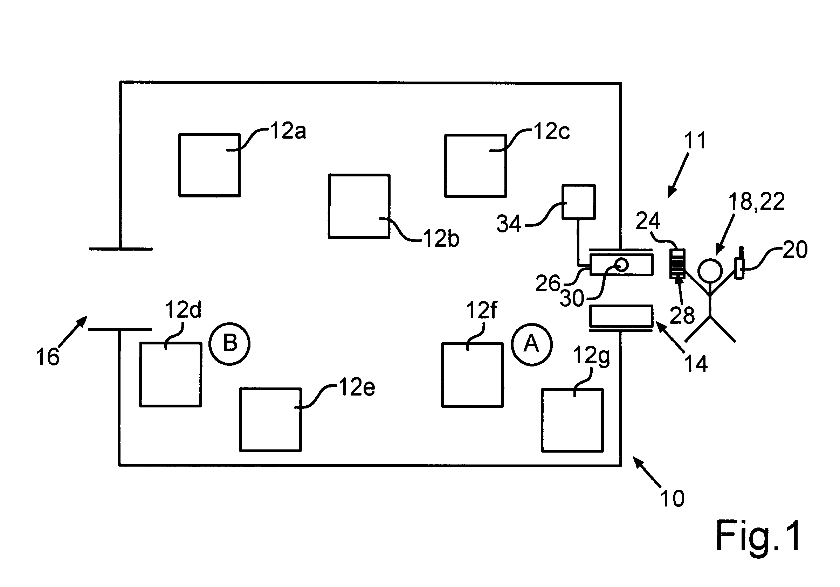

Fig. 1 zeigt eine Einrichtung 10, welche beispielsweise ein Messgelände oder eine Messhalle mit einer Mehrzahl von Messeständen 12a-g ist. Der Einrichtung 10 ist ein Eingang 14 zugeordnet, über welchen Personen auf bzw. in die Einrichtung 10 gelangen können. Vorliegend handelt es sich bei dem Eingang 14 um einen Personeneingang, über welchen die Personen die Einrichtung 10 betreten können. Der Eingang 14 umfasst beispielsweise eine Durchgangsschleuse mit einem Drehkreuz.

Der Einrichtung 10 ist ferner ein Ausgang 16 zugeordnet, über welchen die Personen die Einrichtung 10 wieder verlassen können. Bei dem Ausgang 16 handelt es sich vorliegend um einen Personenausgang.

In Fig. 1 ist eine Person 18 gezeigt, welche im Besitz eines Mobilfunkgeräts vorliegend in Form eines Mobiltelefons 20 ist. Das Mobiltelefon 20 ist dabei mit einem Mobilfunknetz verbunden. Die Person 18 wird auch als Nutzer 22 des Mobiltelefons 20 bezeichnet. Der Nutzer 22 besitzt auch ein Eingangselement, welches als Eintrittskarte 24 bezeichnet ist und welches den Nutzer 22 berechtigt, die Einrichtung 10 über ihren Eingang 14 zu betreten.

Am Eingang 14 der Einrichtung 10 ist eine Erfassungsvorrichtung 26 eines Systems 11 angeordnet. Die Eintrittskarte 24 und die Erfassungsvorrichtung 26 sind dazu eingerichtet, miteinander zu agieren, wobei die Erfassungsvorrichtung 26 auch dazu eingerichtet ist, infolge der Interaktion mit der Eintrittskarte 24 ein Passieren des Eingangs 14 durch den Nutzer 22 und somit das Betreten der Einrichtung 10 durch den Nutzer 22 zu erfassen.

Zur Interaktion mit der Erfassungsvorrichtung 26 weist die Eintrittskarte 24 beispielsweise einen Strichcode 28 auf. Zur Interaktion mit der Eintrittskarte 24 weist die Erfassungsvorrichtung 26 eine optische Erfassungseinrichtung 30 auf, mittels welcher der Strichcode 28 optisch erfassbar, d. h. zu scannen ist. Dazu bewegt der Nutzer 22 die Eintrittskarte 24 bzw. ihren Strichcode 28 in einen Erfassungsbereich der optischen Erfassungseinrichtung 30.

Die Interaktion der Eintrittskarte 24 mit der Erfassungsvorrichtung 26 über den Strichcode 28 und die optische Erfassungseinrichtung 30 erfolgt dabei unabhängig von einem Mobilfunknetz und insbesondere unabhängig von dem Mobilfunknetz, mit welchem das Mobiltelefon 20 verbunden bzw. gekoppelt ist.

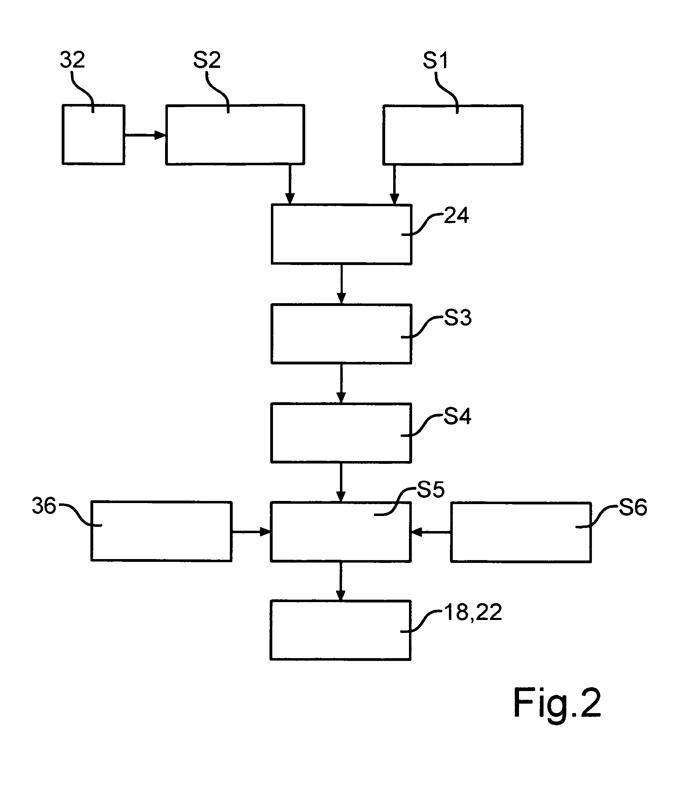

In Fig. 2 sind zwei Möglichkeiten schematisch dargestellt, wie der Nutzer 22 in Besitz der Eintrittskarte 24 gelangen kann. Eine erste der Möglichkeiten ist durch einen ersten Schritt S1 veranschaulicht. Bei dem ersten Schritt S1 erwirbt der Nutzer 22 die Eintrittskarte 24 vor Ort an der Einrichtung 10, beispielsweise an einer Eintrittskasse.

Die zweite Möglichkeit ist durch einen zweiten Schritt S2 veranschaulicht. Beim zweiten Schritt S2 kauft der Nutzer 22 die Eintrittskarte 24 online, d. h. über das Internet bzw. über eine der Einrichtung 10 zugeordnete Website im Internet und druckt die Eintrittskarte 24 beispielsweise mittels eines Druckers aus. Zum Kauf der Eintrittskarte 24 bei dem zweiten Schritt S2 steht dem Nutzer 22 beispielsweise wenigstens ein Gutschein 32 zur Verfügung. Im Rahmen des Erwerbs der Eintrittskarte 24 sowohl beim ersten Schritt S1 als auch beim zweiten Schritt S2 gibt der Nutzer 22 seine EmailAdresse sowie eine Einverständniserklärung zum Datenschutz an, welche in einer Speichereinrichtung des Systems 11 hinterlegt, d. h. abgespeichert werden. Die Speichereinrichtung ist beispielsweise in der Erfassungsvorrichtung 26 oder in einer mit der Erfassungsvorrichtung 26 gekoppelten Sendevorrichtung 34 des Systems 11 integriert.

In Fig. 2 erfolgt die Interaktion der Eintrittskarte 24 mit der Erfassungsvorrichtung 26 bei einem dritten Schritt S3. Infolge der Interaktion der Eintrittskarte 24 mit der Erfassungsvorrichtung 26 wird - wie durch einen vierten Schritt S4 dargestellt ist - ein Auslösesignal von der Erfassungsvorrichtung 26 übermittelt. Die mit der Erfassungsvorrichtung 26 gekoppelte Sendevorrichtung 34 ist dabei dazu eingerichtet, das Auslösesignal zu empfangen. Bei einem fünften Schritt S5 wird mittels der Sendevorrichtung 34 - da die Einverständniserklärung zum Datenschutz sowie die Emailadresse des Nutzers 22 hinterlegt sind - eine erste Nachricht in Form einer ersten Email über das Mobilfunknetz an das Mobiltelefon 20 übermittelt.

Der Inhalt der ersten Nachricht sowie etwaiger, weiterer Nachrichten in Form von Emails an das Mobiltelefon 20 und damit an den Nutzer 22 werden dabei beispielsweise von jeweiligen Personen 36 bereitgestellt, welche die Einrichtung 10 (Messe) und/oder die Messestände 12a-g betreiben.

Durch diese gezielte Übermittlung der ersten Email an das Mobiltelefon 20 und somit an den Nutzer 22 kann der Nutzer 22 gezielt mit Informationen zur Einrichtung 10 und damit zur Umgebung des Nutzers 22 versorgt werden, ohne dass der Nutzer 22 selbst aktiv werden und nach den Informationen suchen muss. Die Email erreicht dabei den Nutzer 22 automatisch und auch erst dann, wenn dieser tatsächlich die Einrichtung 10 betreten hat.

Vorzugsweise ist vorgesehen, dass der Nutzer 22 beim Erwerb der Eintrittskarte 24, d. h. beim ersten Schritt S1 oder beim zweiten Schritt S2, wenigstens eine nutzerspezifische Angabe durchführt. Diese nutzerspezifische Angabe kann beispielsweise Interessensgebiete des Nutzers 22 umfassen. Dadurch kann der Nutzer 22 gezielt und bedarfsgerecht mittels der Email darüber informiert werden, welche oder welcher der Messestände 12a-g seinen Interessen zumindest im Wesentlichen entspricht. Dies bedeutet, dass sich der Nutzer 22 auf besonders einfache und komfortable Weise auf bzw. in der Einrichtung 10 zurechtfindet und gezielt diejenigen der Messestände 12a-g aufsuchen kann, die seinen Interessen zumindest im Wesentlichen entsprechen.

Die Email kann dabei in deutscher und/oder englischer Sprache abgefasst sein. Vorzugsweise erfolgt die Erstellung der Email bzw. die Erstellung ihres Inhalts in Abhängigkeit von der Zeit. So ist es möglich, den Nutzer 22 ab dem Zeitpunkt seines Passierens des Eingangs 14 beispielsweise nur mit solchen Informationen über Veranstaltungen zu versorgen, welche zeitlich noch bevorstehen. So kann die Information des Nutzers 22 über bereits zeitlich vergangene Veranstaltungen an den Messeständen 12a-g vermieden werden.

Ferner ist es möglich, wenigstens eine weitere Email an das Mobiltelefon 20 zu übermitteln. Die Übermittlung der wenigstens einen weiteren Email kann dabei in Abhängigkeit von der Zeit erfolgen. Dadurch kann der Nutzer 22 über Veränderungen der Einrichtung 10 über der Zeit auf dem Laufenden gehalten werden.

Ferner ist es möglich, dass das Mobiltelefon 20 dazu eingerichtet ist, über ein satellitengestütztes Positionierungssystem seine und damit die Position des Nutzers 22 relativ zur Einrichtung 10 zu bestimmen. Dabei kann die Übermittlung der wenigstens einen weiteren Email in Abhängigkeit von Positionen des Nutzers 22 relativ zur Einrichtung 10 durchgeführt werden.

Befindet sich der Nutzer 22 mit seinem Mobiltelefon 20 beispielsweise an einer ersten Position A, so erhält er beispielsweise eine weitere Email mit Informationen über die Messestände 12f und g.

Befindet sich der Nutzer 22 beispielsweise an einer zweiten Position B, so erhält der Nutzer 22 Informationen lediglich über die Messestände 12d und e. Dadurch können die Informationen bzw. die Inhalte der jeweiligen Email gefiltert und auf die Position des Nutzers 22 abgestimmt werden, um somit eine für den Nutzer 22 überfordernde Informationsflut zu vermeiden.

Die Möglichkeit der Positionsbestimmung mittels des Mobiltelefons 20 über das satellitengestützte Positionierungssystem ermöglicht es auch, ein Verlassen der Einrichtung 10 durch den Nutzer 22 über den Ausgang 16 zu erfassen. Ergibt beispielsweise die Positionsbestimmung, dass ein Abstand zwischen der aktuellen Position des Nutzers 22 und der Einrichtung 10 größer ist als ein vorgebbarer Schwellenwert, so kann auf ein Verlassen der Einrichtung 10 durch den Nutzer 22 rückgeschlossen werden. Daraufhin kann bei einem sechsten Schritt S6 die Übermittlung von Emails an das Mobiltelefon 20 beendet bzw. die Übermittlung weiterer Emails an das Mobiltelefon 20 vermieden werden.

Die Einrichtung 10 kann auch ein einzelnes Bauwerk, ein Fahrzeug wie beispielsweise ein Landfahrzeug, Luftfahrzeug oder Wasserfahrzeug sein. Ebenso kann die Einrichtung 10 ein Gebiet, beispielsweise ein Skigebiet sein, wobei der Eingang 14 ein Eingang zu einem Skilift des Skigebiets ist. Ferner kann die Einrichtung 10 auch ein Autobahnabschnitt eines Autobahnnetzes sein. Der Eingang 14 ist dabei beispielsweise ein Portal, welches der Nutzer 22 in einem Kraftwagen fahrend passiert.

## Patentansprüche

1. System (11) zum automatischen Senden wenigstens einer Nachricht über zumindest ein Mobilfunknetz an wenigstens ein Mobilfunkgerät (20), mit zumindest einer, an einem Eingang (14) zu einer Einrichtung (10) angeordneten Erfassungsvorrichtung (26), welche dazu eingerichtet ist, ein Passieren des Eingangs (14) durch einen Nutzer (22) des Mobilfunkgeräts (20) infolge einer von einem Mobilfunknetz unabhängigen Interaktion eines Eingangselements (24) des Nutzers (22) mit der Erfassungsvorrichtung (26) zu erfassen und infolge des Erfassens des Passierens wenigstens ein Auslösesignal zu übermitteln, und mit einer mit der Erfassungsvorrichtung (26) gekoppelten Sendevorrichtung (34), welche dazu eingerichtet ist, das Auslösesignal zu empfangen und infolge des Empfangens des Auslösesignals die wenigstens eine Nachricht an das Mobilfunkgerät (22) zu übermitteln
**dadurch gekennzeichnet, dass**
das System (11) eine vom Eingangselement (24) unterschiedliche Speichereinrichtung zum Speichern von Kontaktinformationen des Nutzers (22) umfasst, und dass die Sendevorrichtung (34) dazu eingerichtet ist, die wenigstens eine Nachricht an die zeitlich vor der Interaktion des Eingangselements (24) mit der Erfassungsvorrichtung (26) in der Speichereinrichtung des Systems (11) hinterlegten Kontaktinformationen des Nutzers (22) zu übermitteln.

2. System (11) nach Anspruch 1,
**dadurch gekennzeichnet, dass**
das Eingangselement (24) eine aus Papier und/oder aus einem Kunststoff gebildete Eintrittskarte (24) ist.

3. System (11) nach einem der Ansprüche 1 oder 2,
**dadurch gekennzeichnet, dass**
das Eingangselement (24) und die Erfassungsvorrichtung dazu eingerichtet sind, zum Erfassen des Passierens des Eingangs (14) über elektromagnetische Wellen miteinander zu interagieren.

4. System (11) nach Anspruch 3,
**dadurch gekennzeichnet, dass**
das Eingangselement (24) wenigstens einen RFID-Chip zum Interagieren über elektromagnetische Wellen mit der Erfassungsvorrichtung (26) umfasst.

5. System (11) nach einem der vorhergehenden Ansprüche,
**dadurch gekennzeichnet, dass**
das Eingangselement (24) und die Erfassungsvorrichtung (26) dazu eingerichtet sind, derart miteinander zu interagieren, dass das Eingangselement (24) zumindest teilweise in eine Aufnahmeöffnung der Erfassungsvorrichtung (26) einführbar ist.

6. System (11) nach einem der vorhergehenden Ansprüche,
**dadurch gekennzeichnet, dass**
das Eingangselement (24) wenigstens ein optisch erfassbares Muster (28) aufweist, wobei die Erfassungsvorrichtung (26) wenigstens eine optische Erfassungseinrichtung (30) umfasst, mittels welcher zum Interagieren der Erfassungsvorrichtung (26) mit dem Eingangselement (24) das optische Muster (28) des Eingangselements (24) erfassbar ist.

7. System (11) nach einem der vorhergehenden Ansprüche,
**dadurch gekennzeichnet, dass**
das System (11) wenigstens eine weitere Erfassungsvorrichtung umfasst, wobei die weitere Erfassungsvorrichtung und das Mobilfunkgerät (20) dazu eingerichtet sind, eine Relativposition des Mobilfunkgeräts (20) zur Einrichtung (10) mittels eines Positionierungssystems zu ermitteln.

8. System (11) nach Anspruch 7,
**dadurch gekennzeichnet, dass**
das Positionierungssystem ein satellitengestütztes Positionierungssystem ist.

9. Verfahren zum automatischen Senden wenigstens einer Nachricht über zumindest ein Mobilfunknetz an wenigstens ein Mobilfunkgerät (20), mit den Schritten:
- Erfassen eines Passierens eines Eingang (14) zu einer Einrichtung (14) durch einen Nutzer (22) des Mobilfunkgeräts (20) mittels einer an dem Eingang (14) angeordneten Erfassungsvorrichtung (26) eines Systems (11) infolge einer von einem Mobilfunknetz unabhängigen Interaktion eines Eingangselements (24) des Nutzers (22) mit der Erfassungsvorrichtung (26),
- Übermitteln wenigstens eines Auslösesignals mittels der Erfassungsvorrichtung (26) infolge des Erfassens des Passierens,
- Empfangen des Auslösesignals durch eine mit der Erfassungsvorrichtung (26) gekoppelte Sendevorrichtung (34) des Systems (11) und
- Übermitteln der wenigstens einen Nachricht an das Mobilfunkgerät (20) mittels der Sendevorrichtung (34) infolge des Empfangens des Auslösesignals,
**gekennzeichnet durch** die Schritte:
- Hinterlegen von Kontaktinformationen des Nutzers in einer vom Eingangselement (24) unterschiedlichen Speichereinrichtung des Systems (11) zeitlich vor der Interaktion des Eingangselements (24) mit der Erfassungsvorrichtung (26),
- Übermitteln der wenigstens einen Nachricht an die in der Speichereinrichtung hinterlegten Kontaktinformationen.

10. Verfahren nach Anspruch 9,
**dadurch gekennzeichnet, dass**
die wenigstens eine Nachricht in Abhängigkeit von wenigstens einer vorgebbaren, nutzerspezifischen Angabe übermittelt wird.

11. Verfahren nach einem der Ansprüche 9 oder 10,
**dadurch gekennzeichnet, dass**
wenigstens eine weitere Nachricht über das Mobilfunknetz an das Mobilfunkgerät (20) übermittelt wird.

12. Verfahren nach Anspruch 11,
**dadurch gekennzeichnet, dass**
die wenigstens eine weitere Nachricht in Abhängigkeit von der Zeit und/oder von einer Position des Mobilfunkgeräts (20) relativ zur Einrichtung (10) übermittelt wird.

13. Verfahren nach einem der Ansprüche 9 bis 12,
**dadurch gekennzeichnet, dass**
das Übermitteln von Nachrichten über Mobilfunk an das Mobilfunkgerät (20) in Abhängigkeit von einer Position des Mobilfunkgeräts (20) relativ zu der Einrichtung (10) beendet wird.

14. Verfahren nach Anspruch 13,
**dadurch gekennzeichnet, dass**
das Übermitteln von Nachrichten beendet wird, wenn eine Entfernung des Mobilfunkgeräts (20) von der Einrichtung (10) einen vorgebbaren Schwellenwert überschreitet.

15. Verfahren nach einem der Ansprüche 9 bis 14,
**dadurch gekennzeichnet, dass**
das Übermitteln von Nachrichten über Mobilfunk an das Mobilfunkgerät (20) in Abhängigkeit von der Zeit beendet wird.

## Claims

1. System (11) for automatically transmitting at least one message via at least one mobile radio network to at least one mobile radio device (20), the system (11) comprising:
- at least one detecting device (26) arranged at an entrance (14) to an institution (10), the detecting device (26) being configured to:
• detect passage of the entrance (14) by a user (22) of the mobile radio device (20) as a result of an interaction of an entrance element (24) of the user (22) with the detecting device (26), the interaction being independent of a mobile radio network and
• transmit at least one triggering signal as a result of the detection of the passage, and
- a transmitting device (34) coupled to the detecting device (26), the transmitting device (34) being configured to:
• receive the triggering signal and
• transmit the at least one message to the mobile radio device (20) as a result of reception of the triggering signal,
**characterised in that**
the system (11) comprises a storage means being different from the entrance element (24) and capable of storing contact information of the user (22), wherein the transmitting device (34) is configured to transmit the at least one message to the contact information deposited in the storage means of the system (11) chronologically before the interaction of the entrance element (24) with the detecting device (26).

2. System (11) according to claim 1,
**characterized in that**
the entrance element (24) is an entrance ticket (24) formed from paper and/or plastic.

3. System (11) according to any one of claims 1 or 2,
**characterized in that**
the entrance element (24) and the detecting device are configured to interact with each other via electromagnetic waves for detecting the passage of the entrance (14).

4. System (11) according to claim 3,
**characterized in that**
the entrance element (24) comprises at least one RFID chip for interacting with the detecting device (26) via electromagnetic waves.

5. System (11) according to anyone of the preceding claims,
**characterized in that**
the entrance element (24) and the detecting device (26) are configured to interact with each other such that the entrance element (24) can be at least partially introduced into a receiving opening of the detecting device (26).

6. System (11) according to anyone of the preceding claims,
**characterized in that**
the entrance element (24) has at least one optically detectable pattern (28), wherein the detecting device (26) includes at least one optical detecting means (30), by means of which the optical pattern (28) of the entrance element (24) can be detected for interaction of the detecting device (26) with the entrance element (24).

7. System (11) according to anyone of the preceding claims,
**characterized in that**
the system (11) comprises at least one further detecting device, wherein the further detecting device and the mobile radio device (20) are configured to determine a relative position of the mobile radio device (20) to the institution (10) by means of a positioning system.

8. System (11) according to claim 7,
**characterized in that**
the positioning system is a satellite-based positioning system.

9. Method for automatically transmitting at least one message via at least one mobile radio network to at least one mobile radio device (20), the method comprising the steps of:
- detecting passage of an entrance (14) to an institution (10) by a user (22) of the mobile radio device (20) by means of a detecting device (26) arranged at the entrance (14) as a result of an interaction of an entrance element (24) of the user (22) with the detecting device (26) independent of a mobile radio network,
- transmitting at least one triggering signal by means of the detecting device (26) as a result of the detection of the passage,
- receiving the triggering signal by a transmitting device (34) coupled to the detecting device (26), and
- transmitting the at least one message to the mobile radio device (20) by means of the transmitting device (34) as a result of the reception of the triggering signal
**characterised by** the steps of:
- depositing contact information of the user (22) in a storage means of the system (11) chronologically before the interaction of the entrance element (24) with the detection device (26), the storage means being different from the entrance element (24),
- transmitting the at least one message to the contact information deposited in the storage means.

10. Method according to claim 9,
**characterized in that**
the at least one message is transmitted depending on at least one presettable, user-specific specification.

11. Method according to any one of claims 9 or 10,
**characterized in that**
at least one further message is transmitted to the mobile radio device (20) via the mobile radio network.

12. Method according to claim 11,
**characterized in that**
the at least one further message is transmitted depending on the time and/or on a position of the mobile radio device (20) relative to the institution (10).

13. Method according to any one of claims 9 to 12,
**characterized in that**
the transmission of messages via mobile radio to the mobile radio device (20) is terminated depending on a position of the mobile radio device (20) relative to the institution (10).

14. Method according to claim 13,
**characterized in that**
the transmission of messages is terminated if a distance of the mobile radio device (20) from the institution (10) exceeds a presettable threshold value.

15. Method according to anyone of claims 9 to 14,
**characterized in that**
the transmission of messages via mobile radio to the mobile radio device (20) is terminated depending on the time.

## Revendications

1. Système (11) destiné à l'émission automatique d'au moins un message à au moins un appareil de radiocommunication mobile (20) par l'intermédiaire d'au moins un réseau de radiocommunication mobile, comprenant au moins un dispositif de détection (26) disposé à une entrée (14) menant à une installation (10), lequel dispositif de détection est configuré pour détecter un passage par l'entrée (14) par un utilisateur (22) de l'appareil de radiocommunication mobile (20) suite à une interaction indépendante d'un réseau de radiocommunication mobile d'un élément d'entrée (24) de l'utilisateur (22) avec le dispositif de détection et, suite à la détection du passage, pour transmettre au moins un signal de déclenchement, et comprenant un dispositif émetteur (34) couplé au dispositif de détection (26), lequel dispositif émetteur est configuré pour recevoir le signal de déclenchement et, suite à la réception du signal de déclenchement, pour transmettre l'au moins un message à l'appareil de radiocommunication mobile (22),
**caractérisé en ce que**
le système (11) comprend un dispositif de mémoire différent de l'élément d'entrée (24), destiné à mémoriser des informations de contact de l'utilisateur (22), et **en ce que** le dispositif émetteur (34) est configuré pour transmettre l'au moins un message aux informations de contact de l'utilisateur (22), mémorisées dans le dispositif de mémoire du système (11) chronologiquement avant l'interaction de l'élément d'entrée (24) avec le dispositif de détection (26).

2. Système (11) selon la revendication 1,
**caractérisé en ce que**
l'élément d'entrée (24) est un billet d'entrée (24) formé en papier et/ou dans une matière plastique.

3. Système (11) selon la revendication 1 ou 2,
**caractérisé en ce que**
l'élément d'entrée (24) et le dispositif de détection sont configurés pour interagir entre eux par l'intermédiaire d'ondes électromagnétiques dans le but de détecter le passage par l'entrée (14).

4. Système (11) selon la revendication 3,
**caractérisé en ce que**
l'élément d'entrée (24) comprend au moins une puce RFID pour l'interaction par l'intermédiaire d'ondes électromagnétiques avec le dispositif de détection (26).

5. Système (11) selon l'une quelconque des revendications précédentes,
**caractérisé en ce que**
l'élément d'entrée (24) et le dispositif de détection (26) sont configurés pour interagir entre eux de manière à ce que l'élément d'entrée (24) soit insérable au moins en partie dans un orifice de logement du dispositif de détection (26).

6. Système (11) selon l'une quelconque des revendications précédentes,
**caractérisé en ce que**
l'élément d'entrée (24) présente au moins un modèle (28) optiquement détectable, le dispositif de détection (26) comprenant au moins un dispositif de détection optique (30) au moyen duquel le modèle optique (28) de l'élément d'entrée (24) est détectable pour l'interaction du dispositif de détection (26) avec l'élément d'entrée (24)

7. Système (11) selon l'une quelconque des revendications précédentes,
**caractérisé en ce que**
le système (11) comprend au moins un dispositif de détection supplémentaire, le dispositif de détection supplémentaire et l'appareil de radiocommunication mobile (20) étant configurés pour détecter une position relative de l'appareil de radiocommunication mobile (20) par rapport à l'installation (10) au moyen d'un système de positionnement.

8. Système (11) selon la revendication 7,
**caractérisé en ce que**
le système de positionnement est un système de positionnement assisté par satellite.

9. Procédé destiné à l'émission automatique d'au moins un message à au moins un appareil de radiocommunication mobile (20) par l'intermédiaire d'au moins un réseau de radiocommunication mobile, comprenant les étapes :
- détection d'un passage par une entrée (14) menant à une installation (10) par un utilisateur (22) de l'appareil de radiocommunication mobile (20) au moyen d'un dispositif de détection (26), disposé à l'entrée (14), d'un système (11) suite à une interaction, indépendante d'un réseau de radiocommunication mobile, d'un élément d'entrée (24) de l'utilisateur (22) avec le dispositif de détection (26),
- transmission d'au moins un signal de déclenchement au moyen du dispositif de détection (26) suite à la détection du passage,
- réception du signal de déclenchement par un dispositif émetteur (34) du système (11), couplé au dispositif de détection (26), et
- transmission de l'au moins un message à l'appareil de radiocommunication mobile (20) au moyen du dispositif émetteur (34) suite à la réception du signal de déclenchement,
**caractérisé par** les étapes :
- mise en mémoire d'informations de contact de l'utilisateur dans un dispositif de mémoire du système (11), différent de l'élément d'entrée (24), chronologiquement avant l'interaction de l'élément d'entrée (24) avec le dispositif de détection (26),
- transmission de l'au moins un message aux informations de contact mémorisées dans le dispositif de mémorisation.

10. Procédé selon la revendication 9,
**caractérisé en ce que**
l'au moins un message est transmis en fonction d'au moins une indication prédéfinissable spécifique à l'utilisateur.

11. Procédé selon l'une quelconque des revendications 9 ou 10,
**caractérisé en ce qu'**
au moins un message supplémentaire est transmis à l'appareil de radiocommunication mobile (20) par l'intermédiaire du réseau de radiocommunication mobile.

12. Procédé selon la revendication 11,
**caractérisé en ce que**
l'au moins un message supplémentaire est transmis en fonction du temps et/ou d'une position de l'appareil de radiocommunication mobile (20) par rapport à l'installation (10).

13. Procédé selon l'une quelconque des revendications 9 à 12,
**caractérisé en ce que**
la transmission de messages à l'appareil de radiocommunication mobile (20) par radiocommunication mobile est terminée en fonction d'une position de l'appareil de radiocommunication mobile (20) par rapport à l'installation (10).

14. Procédé selon la revendication 13,
**caractérisé en ce que**
la transmission de messages est terminée lorsqu'une distance de l'appareil de radiocommunication mobile (20) par rapport à l'installation (10) dépasse une valeur seuil prédéfinissable.

15. Procédé selon l'une quelconque des revendications 9 à 14,
**caractérisé en ce que**
la transmission de messages à l'appareil de radiocommunication mobile (20) par radiocommunication mobile est terminée en fonction du temps.
